# EUROPÄISCHE PATENTSCHRIFT

(11) **EP 2 073 216 B1**
(45) Veröffentlichungstag und Bekanntmachung des Hinweises auf die Patenterteilung: **24.06.2020**
(21) Anmeldenummer: 08021135.2
(22) Anmeldetag: 05.12.2008
(51) Int. Cl.: H02G 3/22, H01B 17/30, H01R 13/53

(54) **Elektrisches Durchführungsmodul und Verfahren zu dessen Herstellung**
Electrical feedthrough module and method for producing same
Module de traversée électrique et son procédé de fabrication

(30) Priorität: 17.12.2007 DE 102007061174
(43) Veröffentlichungstag der Anmeldung: 24.06.2009
(73) Patentinhaber: Schott AG, 55122 Mainz (DE)
(72) Erfinder: Bernauer, Johann, DE-84184 Tiefenbach (DE); Rauchensteiner, Jakob, DE-84036 Landshut (DE)
(74) Vertreter: Herden, Andreas F.

(56) Entgegenhaltungen:
- EP-A2- 0 150 556
- DE-A1- 1 490 332
- DE-A1- 1 640 495
- DE-A1- 2 243 607
- DE-U1- 9 419 407
- FR-A- 2 637 133
- GB-A- 2 198 295
- US-A- 4 426 124

## Beschreibung

Die Erfindung betrifft allgemein elektrische Durchführungen, insbesondere elektrische Durchführungen für Druck- bzw. Sicherheitsbehälter, Motoreinführungen, Gehäuseeinführungen und Behältereinführungen.

Um höchste Anforderungen bei der Betriebssicherheit von Sicherheitsbehältern, wie beispielsweise von Reaktorsicherheitsbehältern oder anderen Druckbehältern und sonstigen Stromeinführungen zur Stromversorgung und Durchführung von Steuer- und Meßsignalen zu erfüllen, werden in diesem Bereich vielfach elektrische Durchführungen und Durchführungsmodule verwendet, die bei erhöhten Sicherheitsanforderungen zwei oder mehrere voneinander beabstandete, miteinander verkabelte elektrische Durchführungen hintereinander mit einem oder mehreren durch einen Isolationskörper durchgeführten Leitern aufweisen. Die Durchführungen werden in einem Trägerkörper, im allgemeinen aus Metall, jedoch auch aus Kunststoff gehalten. Im allgemeinen werden dabei zwei solcher Durchführungen verwendet, die beabstandet und miteinander verkabelt sind.
In der Druckschrift GB-A-2 198 295 wird eine elektrische Kopplungsvorrichtung zwischen Bereichen unterschiedlichen Luftdrucks beschrieben. Die Durchkontaktierung erfolgt dabei über geeignete Kopplungselemente die in einen zylindrischen Tubus eingebracht werden. Über entsprechende Elemente wird verhindert, dass ein Druckausgleich zwischen den beiden Druckgebieten stattfinden kann.
In der Druckschrift DE 16 40 495 A1 wird eine Elektrodendurchführung beispielsweise geeignet für Energie-, Mess- und Steuerleitungen in das Innere von Großbehältern z.B. Atomreaktoren beschrieben, deren Dichtigkeit betriebsmäßig laufend oder in Zeitabständen überwachbar ist. Dabei wird ein Rohr aus Stahl beiderseitig mit je einer- oder mehrpoligen scheibenförmigen Durchführungen vakuumdicht verschlossen. Zusätzlich ist ein Stutzen vorgesehen, durch welchen das Innere des Rohrs evakuierbar ist und an welchen Vorrichtungen zum Messen der Werte des Unterdrucks anschließbar sind.

In der Druckschrift DE 94 19 407 U1 wird ein Kompensator für ein Kapselungsgehäuse mit einem ersten rohrförmigen Kapselungsteil und mit einem in diesen ersten begrenzt axial verschiebbaren zweiten Kopplungsteil sowie mit einer zwischen diesen vorgesehenen fixierten Elastomerdichtung, beschrieben.

In der Druckschrift FR-A-2 637 133 wird eine Durchführung beschrieben. Dabei werden in einem zylindrischen Rohr zwei Stangen eingeführt. Eine der Stangen weißt dabei eine klauenförmigen Hohlraum auf. Entlang der Längsachse dieses Holraums, kann die zweite Stange längselastisch bewegt werden.

In der Druckschrift DE 14 90 332 A1 wird eine gasdichte Durchführung eines abgeschirmten Leiters, durch eine metallische Wand, insbesondere die Wand eines Kernreaktorkessels beschrieben. Die gasdichte Durchführung ist dabei als Doppel-Druckglaseinschmelzung mit einem zentralen Leiter und einem diesen koaxial umgebenden, abschirmenden Rohr ausgebildet.

Aus der EP 0 150 556 A2 ist eine Steckervorrichtung bekannt, die zwischen einem Leiter eines Steckers und einem Leiter einer Buchse eine elektrische Verbindung herstellt. Die Leiter sind in leitenden Pins einsteckbar, die über eine elektrisch leitfähige Auskleidung miteinander verbunden sind.

Aus der DE 22 43 607 A1 ist eine elektrische Durchführungsanordnung für Sicherheitsbehälter bekannt. Eine Anschlussplatte enthält Durchführungsöffnungen mit Anschlussdurchführungen aus Silicongummi, in denen leitende Anschlusskontakte angeordnet sind. Die gegenüberliegenden Enden dieser Anschlusskontakte nehmen jeweils Kupplungsanschlüsse auf, zwischen denen elektrische Durchführungsverbindungen hergestellt werden sollen.

Bisher wurden die Leiter der elektrischen Durchführungen solcher Durchführungsmodule mittels Kabel elektrisch miteinander verbunden. Um die Kabel an die Leiter der Durchführungen anzuschließen, wurden dann Crimp- und Schraub-Verbindungen eingesetzt. Diese Verbindungsweise weist jedoch mehrere Nachteile auf. Das Verbinden ist fehlerträchtig, beansprucht sehr viel Platz und ist vor allem zerstörungsfrei nicht mehr lösbar. Crimp-Hülse und Kabel müssen exakt aufeinander abgestimmt sein. Weiterhin ist diese Art der elektrischen Kontaktierung der Leiter auch sehr aufwendig und arbeitsintensiv. Dies ist insbesondere dann nicht unerheblich, wenn ein solches Durchführungsmodul, was durchaus üblich ist, weit über hundert Anschlüsse aufweist, bei welchen die Leiter jeweils miteinander zu verbinden sind.

Der Erfindung liegt daher die Aufgabe zugrunde, ein Durchführungsmodul bereitzustellen, bei welchen die Leiter der Durchführungen sicher miteinander verbunden sind und bei welcher das Verbinden einfacher vorzunehmen ist.

Diese Aufgabe wird bereits in höchst überraschend einfacher Weise durch den Gegenstand der unabhängigen Ansprüche gelöst. Vorteilhafte Ausgestaltungen und Weiterbildungen sind in den abhängigen Ansprüchen angegeben. Demgemäß sieht die Erfindung ein elektrisches Durchführungsmodul, umfassend zumindest zwei axial beabstandete,zueinander fixierte elektrische Durchführungen mit jeweils mehreren durch einen Isolationskörper hindurchgeführten und auf beiden Seiten des Isolationskörpers herausragenden Leiter vor. Hierbei ist der Isolationskörper als gemeinsamer Isolationskörper für alle Leiter einer jeweiligen Durchführung ausgebildet. Die Leiter sind axial beabstandet und jeweils ein Leiter einer Ducrhjführung wird mit einem Leiter einer weiteren Durchführung mit einer Stange elektrisch verbunden. Die Leiter der elektrischen Durchführungen sind mit einem axial zu den Leitern zumindest einer der Durchführungen verschiebbar angeordneten Verbindungselement elektrisch miteinander verbunden. Das Verbindungselement umfasst eine gegenüber den Leitern axial verschiebbare, elektrisch leitende Stange, die an ihren Enden jeweils eine als integraler Bestandteil der Stange ausgebildete Steckbuchse auf. Hierbei fluchten die Leiter der elektrischen Durchführungen paarweise in axialer Richtung betrachtet mit ihren Längsachsen und durch die axial verschiebbare Stange sind zwei dieser axial fluchtenden Leiter elektrisch verbunden. Die Stange ist dadurch als integraler Bestandteil der Stange ausgebildet. Die Stange ist einstückig mit endseitigen Öffnungen zu den axial verlaufenden Löchern ausgebildet, in welchen das oder die Kontaktelemente der Steckbuchse angeordnet sind.

Das Verfahren zur Herstellung eines solchen Durchführungsmoduls basiert dementsprechend darauf, dass zumindest zwei axial beabstandete, zueinander fixierte elektrische Durchführungen mit jeweils mehreren durch einen Isolationskörper hindurchgeführten und auf beiden Seiten des Isolationskörpers herausragenden Leiter mit einem axial zu den Leitern verschiebbar angeordneten Verbindungselement elektrisch miteinander verbunden werden, wobei der Isolationskörper als gemeinsamer Isolationskörper für alle Leiter einer jeweiligen Durchführung ausgebildet ist.. Die Leiter sind hierbei axial beabstandet und jeweils ein Leiter einer Durchführung wird mit einem Leiter einer weiteren Durchführung mit einer Stange elektrisch verbunden. Das Verbindungselement umfasst eine gegenüber den Leitern axial verschiebbare, elektrisch leitende Stange, die an ihren Enden jeweils eine als integraler Bestandteil der Stange ausgebildete Steckbuchse aufweist. Die Leiter der elektrischen Durchführungen fluchten paarweise in axialer Richtung betrachtet mit ihren Längsachsen und durch die axial verschiebbare Stange werden zwei dieser axial fluchtenden Leiter elektrisch verbunden. Die Steckbuchse ist dadurch als integraler Bestandteil der Stange ausgebildet. Die Stange ist einstückig mit endseitigen Öffnungen zu den axial verlaufenden Löchern ausgebildet, in welchen das oder die Kontaktelemente der Steckbuchse angeordnet sind.

Im Speziellen ist das elektrische Durchführungsmodul vorzugsweise folgendermassen aufgebaut: Es sind zumindest zwei elektrische Durchführungen vorgesehen, wobei jede der Durchführungen einen Flansch mit zumindest einer axialen Öffnung umfasst, in welche hermetisch dichtend ein Glas-Isolationskörper eingeschmolzen ist, wobei in den Glas-Isolationskörper eingeschmolzene Leiter vorgesehen sind, , wobei die elektrische Kontaktierung mit jeweils einem Buchsenkontakt hergestellt ist, und wobei zwischen den Isolationskörpern ein das Verbindungselement umgebender Zwischenraum hermetisch eingeschlossen ist.

Das entsprechende Verfahren zur Herstellung einer solchen Durchführung basiert darauf, zumindest zwei elektrische Durchführungen herzustellen, wobei jede der Durchführungen einen Flansch mit zumindest einer axialen Öffnung umfasst, in welche hermetisch dichtend ein Glas-Isolationskörper eingeschmolzen wird, wobei jeweils mehrere durch den Glas-Isolationskörper hindurchgeführte und auf beiden Seiten des Isolationskörpers herausragende Leiter in die Glas-Isolationskörper eingeschmolzen werden, und wobei die Durchführungen so angeordnet werden, dass die Leiter der elektrischen Durchführungen paarweise in axialer Richtung betrachtet mit ihren Längsachsen fluchten und mit einem axial zu den Leitern zumindest einer der Durchführungen verschiebbar angeordneten elektrisch leitenden Verbindungselement mit jeweils einem Buchsenkontakt elektrisch miteinander verbunden werden, und wobei beim Zusammenbau die beiden Durchführungen in axialer Richtung zusammengeführt werden, und dabei die elektrisch leitenden Verbindungselemente sich in axialer Richtung entlang der durch die Verbindungselemente kontaktierten Leitern verschieben wobei die Durchführungen axial beabstandet befestigt werden, so dass zwischen den Isolationskörpern ein die Verbindungselemente umgebender Zwischenraum hermetisch eingeschlossen wird. Durch die axial verschiebbaren Kontakte ist kein besonderer Aufwand bei der Kontaktierung der Leiter mehr erforderlich. Vielmehr werden die Durchführungen so zusammengesetzt, dass die Leiter axial fluchten und dabei der elektrische Kontakt durch die Steckbuchsen hergestellt wird. Die Kontaktierung erfolgt somit gleichzeitig mit dem Zusammensetzen der Durchführungen.

Generell kann ein einzelner Glas-Isolationskörper pro Leiter vorgesehen sein, oder auch mehrere Leiter in einen gemeinsamen Isolationskörper eingeschmolzen werden.

Indem die Leiter der mit einer axial zu den Leitern verschiebbar angeordneten Stange elektrisch miteinander unter Abstand zueinander verbunden werden, wird eine gleich stabile Anordnung verglichen mit den bisher üblichen Kabeln erreicht. Auch kann die Verbindung der Leiter mit den Stangen deutlich einfacher und platzsparender hergestellt werden. Dies gilt insbesondere für solche elektrischen Durchführungen mit mehreren elektrischen Leitern. Wird eine Stange als Verbindungselement eingesetzt, können auch der oder die Leiter der Durchführungen ein- oder beidseitig mit Steckbuchsen versehen sein, in welchen die Stange axial verschiebbar gehaltert wird. Insbesondere können dabei die Leiter beider Durchführungen jeweils eine Steckbuchse aufweisen, in welchen eine Stange als axial verschiebbares Verbindungselement gehaltert ist.

Gemäß einer weiteren Ausführungsform der Erfindung kann auf die Stangen auch, je nach Länge des Durchführungsmoduls, verzichtet werden. Dazu ist vorgesehen, daß ein Durchführungsleiter an der Verbindungsstelle als Buchsenkontakt mit federndem Kontaktelement ausgeführt ist und der Leiter der insbesondere axial zum Durchführungsleiter axial beabstandet angeordneten zweiten Durchführungen in dieser Buchse axial gleitend kontaktiert.

Das erfindungsgemäße Durchführungsmodul ist besonders für die Durchführung höherer elektrischer Leistungen, insbesondere für Starkstrom und/oder Mittelspannung geeignet. Dazu weisen die Leiter der Durchführungen jeweils einen Durchmesser von zumindest 5 Millimetern auf.

Bisher wurden für elektrische Durchführungen bei Sicherheitsbehältern aus Gründen der Betriebssicherheit verschraubte oder vercrimpte Kontakte eingesetzt. Besonders bei Durchführungen, die für hohe Ströme ab 10 Ampére, und/oder Mittelspannung (üblicherweise werden als Mittelspannung Spannungen im Bereich von 1 bis 30 kV bezeichnet) ausgelegt sind, gewährleistet eine Verschraubung oder eine gecrimpte Verbindung einen auf lange Zeit sicheren elektrischen Kontakt mit niedrigem Widerstand. Bei hohen Strömen würde ein merklicher Kontaktwiderstand zu einer starken Erwärmung führen, die wiederum den Kontaktwiderstand erhöht. Ein unsicherer elektrischer Kontakt kann so schnell zum Ausfall der Durchführung führen.

Um eine sichere Kontaktierung für hohe elektrische Leistungen auch mit axial gleitenden Buchsenkontakten herzustellen, werden gemäß einer Weiterbildung der Erfindung kranz- oder korbförmige, federnde Kontaktelemente vorgesehen. Bei solchen kranzförmigen Kontaktelementen sind die einzelnen Federelemente so angeordnet, dass eine Vielzahl von Kontaktstellen entlang eines ringförmigen Kontaktbereiches hergestellt wird.

So können die Buchsen beispielsweise erst auf den Leitern einer der Durchführungen befestigt und anschließend die Leiter der weiteren Durchführung in einem Schritt durch axiales Aufschieben mit den Buchsen kontaktiert werden. Dabei kann auch eine Stange als Verbindungselement eine Steckbuchse an zumindest einem ihrer Enden aufweisen. Möglich ist jedoch auch, daß ein Leiter der Durchführung bereits eine solche integrierte Steckbuchse aufweist. Jedenfalls wird in allen diesen Fällen eine Verbindung mit zumindest einem der Leiter mittels einer Steckbuchsenverbindung hergestellt.

Es ist weiterhin besonders zweckmäßig, wenn die Durchführungen in axialer Richtung der Leiter voneinander beabstandet sind, um einen Einbau in eine Behälterwand zu ermöglichen, so daß der oder die Leiter der einen Durchführung von außen und der oder die Leiter einer weiteren Durchführung innerhalb des Behälters zugänglich sind.

Ein weiterer Vorteil gegenüber flexiblen Kabeln ist auch, dass eventuelle Zuglasten auf den Leiter einer Durchführungshälfte nicht auf den Leiter der anderen Durchführungshälfte übertragen werden können.

Um die Herstellung eines erfindungsgemäßen elektrischen Durchführungsmoduls zu vereinfachen ist es dabei günstig, wenn das Verbindungselement zwei Enden mit Steckbuchsen aufweist, bzw. mindestens einer der jeweils miteinander elektrisch verbundenen Leiter als Steckbuchse ausgeführt ist und der andere Leiter in den Buchsenkörper eintaucht, so dass die Leiterverbindung beider Durchführungen mit einer Steckbuchsenverbindung dauerhaft und sicher bewerkstelligt werden kann.

Eine Steckbuchsenverbindung erlaubt auch eine Bewegung der Stange in axialer Richtung. Mit einer solchen Verbindung wird also die erfindungsgemäße Verschiebbarkeit der Stange in dieser Richtung ermöglicht. Die axiale Verschiebbarkeit ist besonders vorteilhaft, um temperaturbedingte Längenänderungen der zwischen den Durchführungen angeordneten Stange zu ermöglichen, ohne Zug- oder Drucklasten auf die zu verbindenden Durchführungen auszuüben. Ein besonders vorteilhafter Nebeneffekt ist dabei, daß durch die Längenänderungen nicht immer dieselben Stellen der Leiter kontaktiert werden, sondern daß sich die Kontaktstellen ebenfalls in axialer Richtung leicht verschieben. Damit wird auch über einen langen Zeitraum vermieden, daß durch Oxidation der Leiteroberflächen eine Verschlechterung oder sogar Unterbrechung des elektrischen Kontakts zwischen Leiter der Durchführung und der erfindungsgemäß mit der starren Stange hergestellten elektrischen Verbindung zu einem Leiter der anderen Durchführung eintreten kann.

Besonders platzsparend ist es weiterhin, wenn die Steckbuchse in einem axial verlaufenden Loch am Ende der Stange angeordnet ist. Dabei kann die Steckbuchse besonders vorteilhaft als integraler Bestandteil der Stange ausgebildet sein. Damit ist insbesondere gemeint, daß kein gesondertes Steckbuchsenteil auf die Stange aufgesetzt wird, sondern, daß die Stange einstückig mit endseitigen Öffnungen zu den axial verlaufenden Löchern ausgebildet ist, in welchem das oder die Kontaktelemente angeordnet sind.

Unter dem Begriff Stange wird im Sinne der Erfindung nicht ausschließlich ein massiver Gegenstand bezeichnet. Vielmehr ist unter dem Begriff Stange auch allgemein ein starres Verbindungselement zu verstehen. Ein solches Verbindungselement kann gemäß einer Weiterbildung der Erfindung auch als Rohr oder Stab ausgebildet sein oder ein Rohr, beziehungsweise Stab, oder mehrere solcher rohr- oder stabförmigen Elemente umfassen.

Längsverschiebliche Kontakte, insbesondere auch in Verbindung mit Steckbuchsen können vorteilhaft durch die Kontaktierung des Verbindungselements mit dem Leiter mittels eines Lamellenkontakts und/oder eines Drahtfederkontakts erreicht werden. Beide Kontakte können insbesondere, wie oben erwähnt kranz- oder korbförmig ausgestaltet sein, um auch für die Durchführung hoher elektrischer Leistungen gut geeignet zu sein.

Weiterhin ist eine feste mechanische Verbindung der zumindest zwei Durchführungen wünschenswert. Um dies zu erreichen, können die Isolationskörper der Durchführungen mit einem röhrenförmigen Körper verbunden werden. Indem die elektrischen Durchführungen in einem röhrenförmigen Körper befestigt werden, wird eine feste Verbindung zwischen den Durchführungen geschaffen, wobei eine oder mehrere Stangen geschützt im Inneren des röhrenförmigen Körpers zwischen den Leitern verlaufen. Die Montage des elektrischen Durchführungsmoduls wird dabei erleichtert, wenn der röhrenförmige Körper aus mehreren Teilen zusammengesetzt wird, die miteinander verbunden werden. Die Verbindung kann dabei durch Verschrauben und/oder Verschweißen hergestellt werden.

Für Durchführungen mit mehreren Leitern ist es weiterhin vorteilhaft, wenn die Durchführungen jeweils mehrere Leiter aufweisen, wobei die Leiter zumindest bei einer der Durchführungen durch einen gemeinsamen Isolationskörper durchgeführt und gestützt sind. Dies ermöglicht eine sehr dichte Anordnung der Leiter. Aufgrund der erfindungsgemäßen Kontaktierung durch Stangen, die insbesondere einfach auf die Leiter aufgesteckt werden können, ergeben sich dabei auch bei einer dichten Anordnung keine Probleme beim Zusammensetzen des elektrischen Durchführungsmoduls.

Besonders bevorzugt werden elektrische Durchführungen, bei welchen die Isolationskörper jeweils eine Glasisolierung umfassen, in welche bei der Herstellung der zumindest ein Leiter der Durchführung eingeschmolzen wird. Glas als Isolationsmaterial ist besonders langzeitbeständig, hermetisch dicht und temperaturbeständig. Um auch die Ränder der Durchführung hermetisch abzudichten, wird die Glasisolierung weiterhin vorzugsweise in einer Metallfassung eingeschmolzen.

Die Erfindung wird nachfolgend anhand von Ausführungsbeispielen und unter Bezugnahme auf die beigefügten Zeichnungen näher erläutert. Dabei kennzeichnen gleiche Bezugszeichen gleiche oder ähnliche Teile.

Es zeigen:
- Fig. 1: eine Querschnittansicht eines Ausführungsbeispiels eines erfindungsgemäßen elektrischen Durchführungsmoduls,
- Fig. 2: eine Querschnittansicht einer Stange mit Drahtfederkontakten für ein erfindungsgemäßes Durchführungsmodul,
- Fig. 3: eine Variante der in Fig. 2 gezeigten Stange in Rohrausführung und mit Lamellenkontakt,
- Fig. 4: eine nicht beanspruchte Variante des in Fig. 1 gezeigten Ausführungsbeispiels, bei welcher die Durchführungsleiter einer Durchführung an der Verbindungsstelle als Buchsenkontakt mit federnden Kontaktelement ausgeführt sind,
- Fig. 5: eine Ausführungsform eines Durchführungsmoduls mit direkt verbundenen elektrischen Durchführungen.

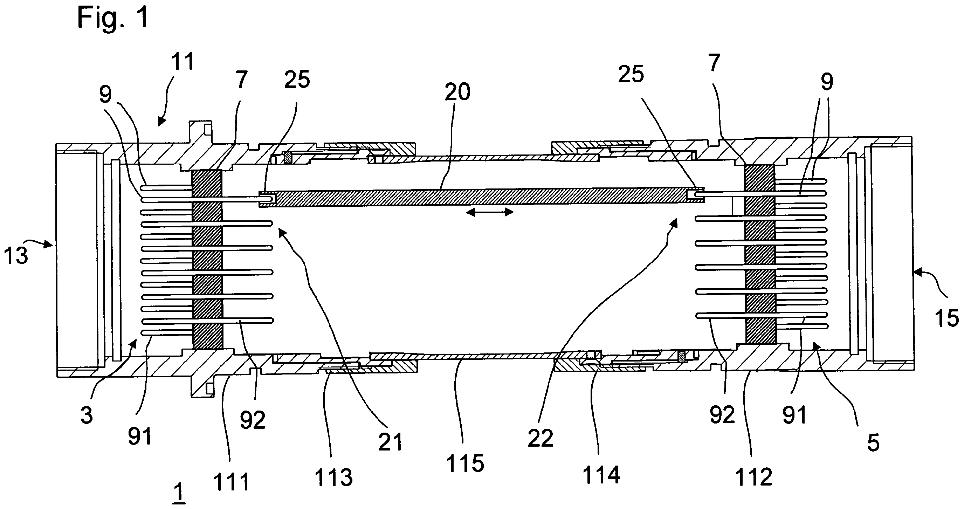

Fig. 1 zeigt in Querschnittansicht Teile eines Ausführungsbeispiels eines als Ganzes mit dem Bezugszeichen 1 bezeichneten erfindungsgemäßen elektrischen Durchführungsmoduls. Das elektrische Durchführungsmodul 1 umfasst zwei beabstandete elektrische Durchführungen 3, 5 mit jeweils mehreren durch einen Isolationskörper 7 hindurchgeführten und auf beiden Seiten des Isolationskörpers 7 herausragenden Leitern 9. Das Durchführungsmodul 1 ist für hohe elektrische Leistungen ausgelegt. Dazu haben die Leiter 9 einen Durchmesser von zumindest 5 Millimetern. Die aus dem Isolationskörper 7 herausragenden Teile der Leiter 9 bilden innenseitige Anschlußenden 92 und außenseitige Anschlußenden 91, wobei die innenseitigen Anschlußenden 92 der Leiter 9 der beiden elektrischen Durchführungen 3, 5 gegenüberliegend und aufeinander weisend angeordnet sind.

Die Isolationskörper 7 sind jeweils als gemeinsame Isolationskörper für alle Leiter einer Durchführung 3, 5
ausgebildet. Insbesondere sind die Isolationskörper bei diesem Beispiel Glasisolierungen in welche die Leiter 9 der Durchführungen zueinander beabstandet eingeschmolzen sind.

Die Durchführungen 3, 5 sind in axialer Richtung der Leiter 9 voneinander beabstandet in einem röhrenförmigen Körper 11 befestigt. Dieser röhrenförmigen Körper 11 setzt sich aus mehreren miteinander verbundenen Teilen 111, 112, 113, 114, 115 zusammen, wobei die Teile 111 und 112 Metallfassungen bilden, in welche jeweils eine oder mehrere Glasisolierungen 7 der Durchführungen 3, 5 eingeschmolzen ist. Die Teile 111, 112, 113, 114 können beispielsweise miteinander verschraubt und/oder verschweißt werden. Das zwischen den beiden Durchführungen im röhrenförmigen Körper gebildete Volumen ist hermetisch eingeschlossen.

Über die endseitigen Öffnungen 13, 15 des Körpers 11 sind jeweils die außenseitigen Anschlußenden 91 der Leiter 9 zugänglich. Das Durchführungsmodul 1 wird dann so in einen dickwandigen Druckbehälter bzw. Sicherheitsbehälter eingebaut, daß eine der Öffnungen 13, 15 innerhalb des Sicherheitsbehälters und die andere Öffnung von außen zugänglich ist, um die äußeren Anschlußenden 91 beidseitig verkabeln zu können und so elektrische Verbindungen in das Innere des Sicherheitsbehälters herzustellen.

Der Kontakt zwischen jeweils gegenüberliegenden Leitern 9 der beiden axial bezüglich der Leiter 9 beabstandeten Durchführungen 3, 5 wird erfindungsgemäß erreicht, indem die Leiter 9 der elektrischen Durchführungen 3, 5 mit einer axial zu den Leitern 9 verschiebbar angeordneten elektrisch leitenden Stange 20 als Verbindungselement miteinander verbunden sind. Die Verschiebbarkeit in axialer Richtung, beziehungsweise entlang der Leiter 9 ist anhand des in die Stange 20 eingezeichneten Doppelpfeiles angedeutet.

Jedes Paar gegenüberliegender Leiter 9 der Durchführungen 3, 5 ist mit einer solchen Stange verbunden. Zum Zwecke der Übersichtlichkeit ist in Fig. 1 jedoch nur eine einzelne Stange 20 dargestellt, welche zwei Leiter 9 miteinander kontaktiert.

Die axial verschiebbare Befestigung der Stange 20 an den Leitern erfolgt mittels Steckbuchsenverbindungen. Die beiden Enden 21, 22 der Stange 20 weisen dazu jeweils eine Steckbuchse 25 auf, welche beim Zusammenbau des Durchführungsmoduls auf das innere Anschlußende 92 eines Leiters 9 gesteckt wird.

Zur Herstellung eines solchen Durchführungsmoduls werden demgemäß die beiden elektrischen Durchführungen 3, 5 hergestellt, wobei jede der Durchführungen einen Flansch mit zumindest einer axialen Öffnung umfasst, in welche hermetisch dichtend die Isolationskörper eingeschmolzen wird, wobei jeweils mehrere durch die Isolationskörper 7 hindurchgeführte und auf beiden Seiten des Isolationskörpers 7 herausragende Leiter 9 in den Isolationskörper 7 eingeschmolzen werden.

Die Durchführungen 3, 5 werden dann so angeordnet, dass die Leiter 9 der elektrischen Durchführungen 3, 5 paarweise in axialer Richtung betrachtet mit ihren Längsachsen fluchten und mit axial zu den Leitern 9 zumindest einer der Durchführungen 3, 5 verschiebbar angeordneten elektrisch leitenden Verbindungselement, hier in Form der leitenden Stangen mit Buchsenkontakten elektrisch miteinander verbunden werden. Dabei werdem beim Zusammenbau die beiden Durchführungen in axialer Richtung zusammengeführt und axial beabstandet auf dem röhrenförmigen Körper befestigt, wobei der Zwischenraum vorzugsweise hermetisch abgeschlossen wird. Beim Zusammenführen werden die Steckbuchsen der Stangen in axialer Richtung entlang der Leiter 9 verschoben.

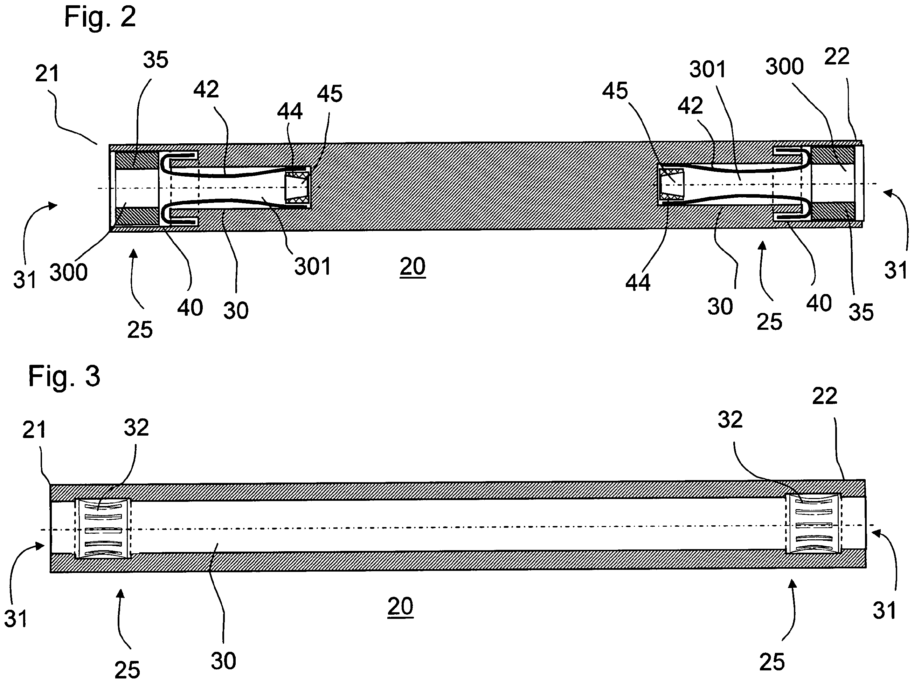

In Fig. 2 ist eine detailliertere Ansicht einer solchen Stange 20 mit Steckbuchsen 25 dargestellt. Die an beiden Enden der Stange 20 angeordneten Steckbuchsen sind integral in der einstückigen Stange 20 ausgebildet. Dazu sind in die Enden 21, 22 der Stange 20 axial verlaufende Löcher 30 mit endseitigen Öffnungen 31 eingefügt. Bei diesem Ausführungsbeispiel der Erfindung weist die Stange 20 Drahtfederkontakte zur Kontaktierung mit den Leitern 9 der Durchführungen auf. Mit dieser Stange 20 werden die Leiter 9 mit den Drahtfederkontakten der an den Enden 21, 22 der Stange 20 angeordneten Steckbuchsen 25 kontaktiert.

Die Steckbuchsen umfassen jeweils axial verlaufende Löcher 30. Diese Löcher weisen einen ersten, in die Öffnung 31 mündenden Abschnitt 300 und einen daran anschließenden Abschnitt 301 auf, der bis zum Lochende der wie bei dem in Fig. 2 gezeigten Beispiel als Sacklöcher ausgebildeten Löcher 30 reicht. In einer ringförmigen Tasche 40 sind jeweils Enden einer Vielzahl von Drahtfedern 42 aufgenommen, welche in den hinteren Abschnitt 301 hineinreichen und am inneren Ende des Loches 30 mit einem Klemmelement 44 fixiert sind. Das Fixieren des Klemmelementes 44 kann beispielsweise durch Einsetzen und Aufweiten des Klemmelements 44 erfolgen, indem ein konischer Stößel in die Öffnung 45 des Klemmelements 44 eingepresst wird, so daß sich das Klemmelement aufweitet. Um das Herausfallen der Drahtfedern zu verhindern, kann alternativ oder zusätzlich jeweils ein kurzes Rohrstück 35 in den Abschnitt 300 des Lochs 30 eingesetzt sein.

Fig. 3 zeigt eine Variante der in Fig. 2 dargestellten Stange 20. Bei dieser Variante ist die Stange 20 nicht massiv, sondern als Rohr mit einem durchgehenden Loch 30. Zur Kontaktierung dienen Lamellenkontakte 32.

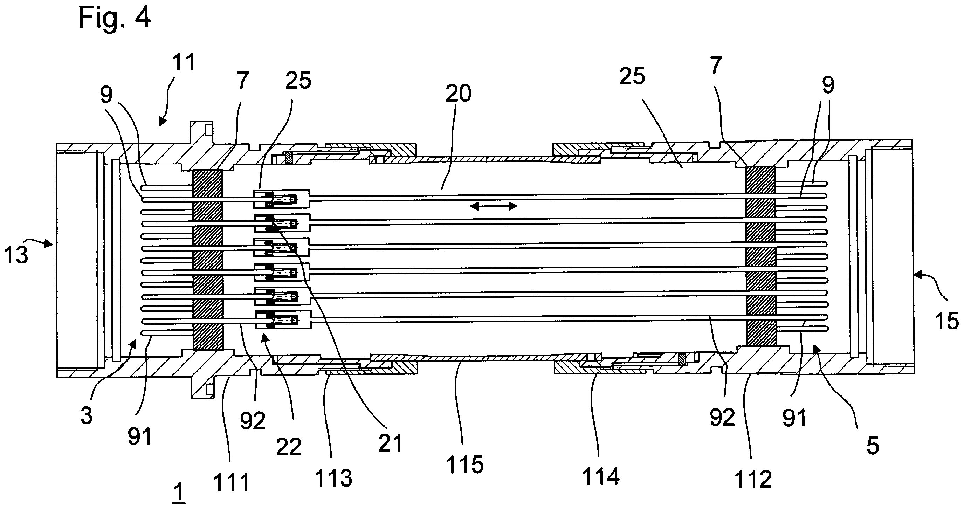

Fig. 4 zeigt eine nicht beanspruchte Variante des in Fig. 1 gezeigten Ausführungsbeispiels. Bei dieser Variante sind die beiden Durchführungen nicht über eine Stange als Verbindungselement, sondern direkt elektrisch miteinander verbunden. Dazu sind die Leiter 9 der Durchführung 5 an der elektrischen Verbindungsstelle der Leiter 9 der beiden Durchführungen 3, 5 als Steckbuchsen 25 mit federnden Kontaktelement ausgeführt. Beispielsweise können diese Steckbuchsen als axial bewegbare Verbindungselemente entsprechend wie bei der in Fig. 2 gezeigten Stange ausgebildet sein. Die Leiter 9 der axial zu den Leitern 9 der Durchführung 5 axial beabstandet angeordneten Durchführungen 3 sind jeweils in einer der Steckbuchsen 25 axial gleitend kontaktiert. Insbesondere sind die Steckbuchsen in die Leiter 9 der Durchführung 5 integriert.

Diese Bauform eignet sich insbesondere für kürzere Durchführungsmodule. Allen Ausführungsformen ist gemeinsam, daß die beiden Durchführungen im fertig zusammengesetzten Durchführungsmodul zueinander fixiert sind, jedoch auch im zusammengesetzten Durchführungsmodul über ein in axialer Richtung eines Durchführungsleiters zumindest einer der Durchführungen gleitend bewegbares, elektrisch leitendes Verbindungselement ein Durchführungsleiter einer Durchführung mit einem Durchführungsleiter der anderen Durchführung elektrisch kontaktiert ist.

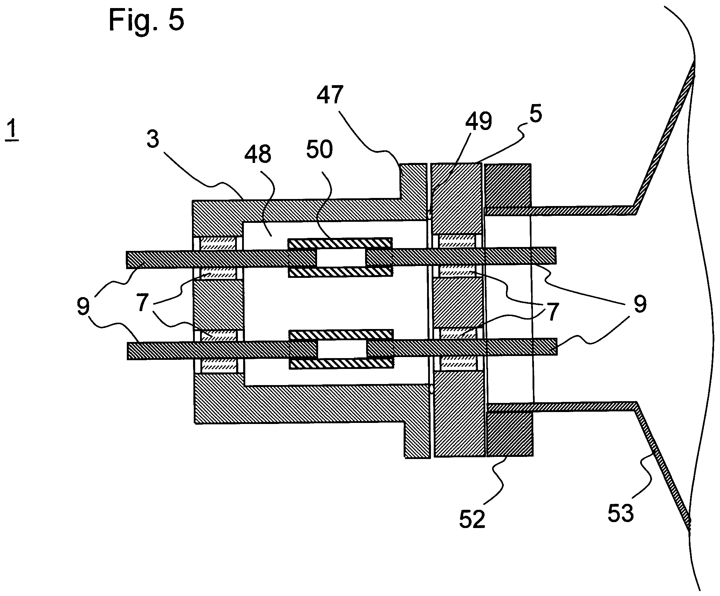

Es ist dem Fachmann ersichtlich, dass der Körper 11 der in Fig. 1 gezeigten Ausführungsform eines Durchführungsmoduls auch eine andere, an den jeweiligen Anwendungszweck angepasste Form haben kann, also nicht röhrenförmig zu sein braucht. Auch können die beiden Durchführungen 3,5 gemäß noch einer anderen Ausführungsform der Erfindung auch direkt miteinander verbunden werden. Zur Herstellung eines die Leiter innenseitig umschliessenden, hermetisch abgeschlossenen Hohlraums kann dazu eine oder beide der Durchführungen 3, 5 hutförmig ausgestaltet sein. Ein solches Beispiel zeigt Fig. 5. Bei diesem Beispiel ist die Durchführung 3 hutförmig ausgestaltet, während die Durchführung 5 als im wesentlichen scheibenförmiger Flansch ausgebildet ist. Die Krempe 47 der hutförmigen Durchführung 3 bildet einen Befestigungsflansch, mit welcher die Durchführung 3 mit der Durchführung 5 verschraubt ist. Eine Ringdichtung 49 sorgt für einen hermetischen Abschluss des eingeschlossenen Zwischenraumes 48. Die axial fluchtenden Leiter 9 können wie auch in den vorangegangenen Beispielen selbst eine Steckbuchsenverbindung aufweisen, oder mit eine Stange 20 verbunden werden. Bei dem dargestellten Beispiel wurden alternativ Doppelsteckbuchsen 50 verwendet. Diese können beispielsweise beidseitig Steckbuchsen nach Art der in den Fig. 2 und 3 gezeigten Beispiele mit kranzförmig angeordneten Drahtfedern und/oder Lamellenkontakten aufweisen.

Zwar sind bei dieser Ausführungsform der Erfindung die Durchführungen direkt aufeinandergesetzt, allerdings sind auch hier, wie in den vorhergehenden Beispielen die paarweise kontaktierten Leiter in axialer Richtung beabstandet.

Das in Fig. 5 gezeigte Durchführungsmodul 1 ist unter anderem gut geeignet, um an Flanschöffnungen von Sicherheitsbehältern angeflanscht zu werden. Dargestellt ist in Fig. 5 ein Beispiel, bei welchem der Flansch 5 des Durchführungsmoduls 1 an den Anschlussflansch 52 eines Sicherheitsbehälters 53 angeflanscht ist.

## Patentansprüche

1. Elektrisches Durchführungsmodul (1), umfassend zumindest zwei axial beabstandete, zueinander fixierte elektrische Durchführungen (3, 5), mit jeweils mehreren durch einen Isolationskörper (7) hindurchgeführten und auf beiden Seiten des Isolationskörpers (7) herausragenden Leitern (9), wobei
- der Isolationskörper (7) als gemeinsamer Isolationskörper für alle Leiter (9) einer jeweiligen Durchführung (3, 5) ausgebildet ist,
- die Leiter (9) der axial beabstandeten Durchführungen (3, 5) auch axial beabstandet sind,
- jeweils ein Leiter (9) einer der Durchführungen mit einem Leiter (9) einer der weiteren axial beabstandeten Durchführungen mit einem Verbindungselement elektrisch verbunden ist,
- die axial beabstandeten Leiter (9) der elektrischen Durchführungen (3, 5) mit dem axial zu den Leitern (9) zumindest einer der Durchführungen (3, 5) verschiebbar angeordneten Verbindungselement elektrisch miteinander verbunden sind, und
- wobei das Verbindungselement eine gegenüber den Leitern (9) axial verschiebbare, elektrisch leitende Stange (20) umfasst, die an ihren Enden (21, 22) jeweils eine als integraler Bestandteil der Stange (20) ausgebildete Steckbuchse (25) aufweist, **wobei** die Leiter (9) der elektrischen Durchführungen (3, 5) paarweise in axialer Richtung betrachtet mit ihren Längsachsen fluchten und durch die axial verschiebbare Stange (20) zwei dieser axial fluchtenden Leiter elektrisch verbunden sind und die Steckbuchse (25) dadurch als integraler Bestandteil der Stange (20) ausgebildet ist, dass die Stange (20) einstückig mit endseitigen Öffnungen zu den axial verlaufenden Löchern ausgebildet ist, in welchen das oder die Kontaktelemente der Steckbuchse (25) angeordnet sind.

2. Elektrisches Durchführungsmodul (1) gemäß Anspruch 1,
**dadurch gekennzeichnet,**
**dass** jede der Durchführungen (3, 5) einen Flansch mit zumindest einer axialen Öffnung umfasst, in welche hermetisch dichtend ein Glas-Isolationskörper (7) eingeschmolzen ist,
wobei jeweils mehrere durch den Glas-Isolationskörper (7) hindurchgeführte und auf beiden Seiten des Isolationskörpers herausragende, in den Glas-Isolationskörper eingeschmolzene Leiter (9) vorgesehen sind,
und wobei zwischen den Isolationskörpern ein das Verbindungselement umgebender Zwischenraum hermetisch eingeschlossen ist.

3. Elektrisches Durchführungsmodul (1) gemäß einem der beiden vorstehenden Ansprüche, **dadurch gekennzeichnet, dass** die Leiter (9) der Durchführungen jeweils einen Durchmesser von zumindest 5 Millimetern aufweisen.

4. Elektrisches Durchführungsmodul (1) gemäß Anspruch 1, **dadurch gekennzeichnet, daß** die Steckbuchsen an der Verbindungsstelle als Buchsenkontakt mit federndem Kontaktelement ausgeführt sind und die Leiter (9) der axial zum Durchführungsleiter beabstandet angeordneten zweiten Durchführungen in dieser Buchse axial gleitend kontaktieren.

5. Elektrisches Durchführungsmodul (1) gemäß einem der vorstehenden Ansprüche, **dadurch gekennzeichnet, daß** das Verbindungselement einen Lamellenkontakt und/oder einen Drahtfederkontakt umfasst, insbesondere können die Kontaktelemente dabei kranz- oder korbförmig ausgeführt sein.

6. Elektrisches Durchführungsmodul (1) gemäß einem der vorstehenden Ansprüche, **dadurch gekennzeichnet, daß** die Stange (20) in Rohr- oder Stabform ausgeführt ist.

7. Verfahren zur Herstellung eines Durchführungsmoduls (1) gemäß einem der vorstehenden Ansprüche, bei welchem zumindest zwei axial beabstandete, zueinander fixierte elektrische Durchführungen (3, 5) mit jeweils mehreren durch einen Isolationskörper (7) hindurchgeführten und auf beiden Seiten des Isolationskörpers (7) herausragenden Leitern (9) mit einem axial zu den Leitern (9) verschiebbar angeordneten Verbindungselement elektrisch miteinander verbunden werden, wobei der Isolationskörper (7) als gemeinsamer Isolationskörper für alle Leiter (9) einer jeweiligen Durchführung (3, 5) ausgebildet ist,
**wobei** die Leiter (9) axial beabstandet sind, jeweils ein Leiter einer Durchführung mit einem Leiter einer weiteren Durchführung mit einer Stange elektrisch verbunden werden,
das Verbindungselement eine gegenüber den Leitern (9) axial verschiebbare, elektrisch leitende Stange (20) umfasst, die an ihren Enden (21, 22) jeweils eine als integraler Bestandteil der Stange (20) ausgebildete Steckbuchse (25) aufweist, die Leiter der elektrischen Durchführungen paarweise in axialer Richtung betrachtet mit ihren Längsachsen fluchten und durch die axial verschiebbare Stange zwei dieser axial fluchtenden Leiter elektrisch verbunden werden, und
die Steckbuchse dadurch als integraler Bestandteil der Stange ausgebildet ist, dass die Stange einstückig mit endseitigen Öffnungen zu den axial verlaufenden Löchern ausgebildet ist, in welchen das oder die Kontaktelemente der Steckbuchse angeordnet sind.

8. Verfahren gemäß dem vorstehenden Anspruch, wobei jede der Durchführungen (3, 5) einen Flansch mit zumindest einer axialen Öffnung umfasst, in welche hermetisch dichtend ein Glas-Isolationskörper (7) eingeschmolzen wird, wobei jeweils mehrere durch den Glas-Isolationskörper (7) hindurchgeführte und auf beiden Seiten des Isolationskörpers (7) herausragende Leiter in die Glas-Isolationskörper eingeschmolzen werden, und wobei beim Zusammenbau die beiden Durchführungen in axialer Richtung zusammengeführt werden, und dabei die elektrisch leitenden Verbindungselemente (20,25; 50) sich in axialer Richtung entlang der durch die Verbindungselemente kontaktierten Leitern verschieben wobei die Durchführungen axial beabstandet befestigt werden, so dass zwischen den Isolationskörpern (7) ein die Verbindungselemente umgebender Zwischenraum hermetisch eingeschlossen wird.

9. Verfahren gemäß einem der vorstehenden zwei Ansprüche, **dadurch gekennzeichnet, daß** zumindest einer der Leiter (9) der Durchführungen (3, 5) mit einem Lamellenkontakt oder einem Drahtfederkontakt kontaktiert wird.

10. Verwendung eines elektrischen Durchführungsmoduls nach einem der Ansprüche 1 bis 6 in einem Druckbehälter- bzw. einer Sicherheitsbehälterdurchführung.

## Claims

1. An electrical feedthrough module (1), comprising at least two axially spaced apart electrical feedthroughs (3, 5) fixed relative to one another, each one comprising a plurality of conductors (9) extending through an insulating body (7) and protruding from the insulating body (7) on either side thereof, wherein
- the insulating body (7) is a shared insulating body for all conductors (9) of a respective feedthrough (3, 5); wherein
- the conductors (9) of the axially spaced apart feedthroughs (3, 5) are also axially spaced apart;
- each conductor (9) of one of the feedthroughs is electrically connected to a respective conductor (9) of one of the further axially spaced apart feedthroughs by a respective connecting member;
- the axially spaced apart conductors (9) of the electrical feedthroughs (3, 5) are electrically connected to one another by the connecting member which is arranged displaceably relative to at least one of the feedthroughs (3, 5); and wherein
- the connecting member comprises an electrically conductive rod (20) that is axially displaceable relative to the conductors (9) and has a socket connector (25) formed as an integral part of the rod (20) at each of its ends (21, 22);
wherein the conductors (9) of the electrical feedthroughs (3, 5) form pairs having their longitudinal axes aligned axially, and wherein each pair of said axially aligned conductors is electrically connected by said axially displaceable rod (20), and wherein the socket connector (25) is formed as an integral part of the rod (20) by the fact that the rod (20) is formed in one piece with openings at the ends thereof to the axially extending holes, in which the one or more terminal member(s) of the socket connector (25) is/are arranged.

2. The electrical feedthrough module (1) according to claim 1, **characterized in that**
each of the feedthroughs (3, 5) comprises a flange with at least one axial opening, into which an insulating glass body (7) is fused in a hermetically sealing manner;
wherein a plurality of conductors (9) are provided, fused into the insulating glass body, extending through the insulating glass body (7) and protruding from the insulating body on either side thereof;
and wherein an intermediate space surrounding the connecting member is hermetically enclosed between the insulating bodies.

3. The electrical feedthrough module (1) according to any one of the two preceding claims, **characterized in that** the conductors (9) of the feedthroughs each have a diameter of at least 5 millimeters,

4. The electrical feedthrough module (1) according to claim 1, **characterized in that** the socket connectors at the connection point are in the form of a socket terminal comprising a resilient contact element, and wherein the conductors (9) of the second feedthroughs arranged axially spaced apart from the feedthrough conductor make axially sliding contact in this socket.

5. The electrical feedthrough module (1) according to any one of the preceding claims, **characterized in that** the connecting member comprises a crown spring contact and/or a wire spring contact, wherein the contact elements can in particular have a collar- or crown-like shape,

6. The electrical feedthrough module (1) according to any one of the preceding claims, **characterized in that** the rod (20) is in the form of a tube or a solid rod.

7. A method for producing a feedthrough module (1) according to any one of the preceding claims, wherein at least two axially spaced apart electrical feedthroughs (3, 5) fixed relative to one another, each one comprising a plurality of conductors (9) extending through an insulating body (7) and protruding from the insulating body (7) on either side thereof, are electrically connected to one another by a connecting member, which is axially displaceable relative to the conductors (9);
wherein the insulating body (7) is a shared insulating body for all conductors (9) of a respective feedthrough (3, 5);
wherein the conductors (9) are axially spaced apart, wherein a respective conductor of one feedthrough is electrically connected to a respective conductor of the other feedthrough by a rod;
wherein the connecting member comprises an electrically conductive rod (20) which is axially displaceable relative to the conductors (9) and has a socket connector (25) at each of its ends (21, 22) formed as an integral part of the rod (20);
wherein the conductors of the electrical feedthroughs form pairs having their longitudinal axes aligned axially, and each pair of said axially aligned conductors is electrically connected by said axially displaceable rod; and
wherein the socket connector is formed as an integral part of the rod by the fact that the rod is formed in one piece with openings at the ends thereof to the axially extending holes, in which the one or more terminal member(s) of the socket connector is/are arranged.

8. The method according to the preceding claim, wherein each of the feedthroughs (3, 5) comprises a flange having at least one axial opening, into which an insulating glass body (7) is fused in a hermetically sealing manner, wherein
a plurality of conductors are fused into each of the insulating glass bodies (7) so as to extend through the insulating glass body (7) and protrude from the insulating body (7) on either side thereof, and wherein during assembly the two feedthroughs are approached axially, thereby axially displacing the electrically conductive connecting members (20, 25; 50) along the conductors contacted by the connecting members, and wherein the feedthroughs are fixed axially at a distance from each other so that an intermediate space surrounding the connecting members is hermetically enclosed between the insulating bodies (7).

9. The method according to any one of the two preceding claims, **characterized in that** at least one of the conductors (9) of the feedthroughs (3, 5) is contacted by a crown spring terminal or a wire spring terminal.

10. Use of an electrical feedthrough module according to any one of claims 1 to 6 in a pressure vessel or a safety vessel feedthrough.

## Revendications

1. Module de traversée électrique (1), comprenant au moins deux traversées électriques (3, 5) espacées axialement et fixées l'une par rapport à l'autre, comportant respectivement plusieurs conducteurs (9) qui passent dans un corps isolant (7) et dépassent sur les deux côtés du corps isolant (7), sachant que
- le corps isolant (7) est réalisé en tant que corps isolant commun pour tous les conducteurs (9) d'une traversée (3, 5) respective, sachant que
- les conducteurs (9) des traversées (3, 5) axialement espacées sont également espacés axialement,
- chaque fois un conducteur (9) de l'une des traversées est relié électriquement par un élément de liaison à un conducteur (9) de l'une des autres traversées axialement espacées,
- les conducteurs (9) axialement espacés des traversées électriques (3, 5) sont reliés électriquement les uns aux autres par l'élément de liaison qui est disposé avec possibilité de déplacement axial par rapport aux conducteurs (9) d'au moins une des traversées, et
- sachant que l'élément de liaison comprend une tige (20) électriquement conductrice qui peut être déplacée axialement par rapport aux conducteurs (9) et qui présente à ses extrémités (21, 22) respectivement une fiche femelle (25) réalisée en tant que partie intégrante de la tige (20), les conducteurs (9) des traversées électriques (3, 5), considérés par paires dans le sens axial, étant alignés avec leurs axes longitudinaux, et deux de ces conducteurs axialement alignés étant reliés électriquement par la tige (20) déplaçable axialement, et la fiche femelle (25) étant réalisée en tant que partie intégrante de la tige (20), par le fait que la tige (20) est réalisée d'une seule pièce avec des ouvertures situées côté extrémités par rapport aux trous qui s'étendent axialement et dans lesquels sont disposés le ou les éléments de contact de la fiche femelle (25).

2. Module de traversée électrique (1) selon la revendication 1, **caractérisé en ce que**
chacune des traversées (3, 5) comprend un collet doté d'au moins une ouverture axiale dans laquelle un corps isolant en verre (7) est scellé par fusion, de manière à établir une étanchéité hermétique,
sachant que chaque fois il est prévu plusieurs conducteurs (9) qui traversent le corps isolant en verre (7) et dépassent sur les deux côtés du corps isolant et qui sont scellés par fusion dans le corps isolant en verre,
et sachant qu'un espace entourant l'élément de liaison est enfermé hermétiquement entre les corps isolants.

3. Module de traversée électrique (1) selon l'une des deux revendications précédentes, **caractérisé en ce que** les conducteurs (9) des traversées présentent chacun un diamètre d'au moins 5 millimètres.

4. Module de traversée électrique (1) selon la revendication 1, **caractérisé en ce que** les fiches femelles sont réalisées, à l'emplacement de liaison, en tant que contact femelle doté d'un élément de contact élastique, et que les conducteurs (9) des deuxièmes traversées, espacées axialement par rapport au conducteur de traversée, sont en contact dans cette fiche femelle en coulissant axialement.

5. Module de traversée électrique (1) selon l'une des revendications précédentes, **caractérisé en ce que** l'élément de liaison comprend un contact à lamelles et/ou un contact à fils ressorts, et les éléments de contact peuvent notamment être réalisés en forme de couronnes ou de paniers.

6. Module de traversée électrique (1) selon l'une des revendications précédentes, **caractérisé en ce que** la tige (20) est réalisée sous forme de tube ou de barre.

7. Procédé de fabrication d'un module de traversée électrique (1) selon l'une des revendications précédentes, selon lequel on relie électriquement au moins deux traversées électriques (3, 5) espacées axialement et fixées l'une par rapport à l'autre, comportant respectivement plusieurs conducteurs (9) qui passent dans un corps isolant (7) et dépassent sur les deux côtés du corps isolant (7), par un élément de liaison disposé avec possibilité de déplacement axial par rapport aux conducteurs (9), le corps isolant (7) étant réalisé en tant que corps isolant commun pour tous les conducteurs (9) d'une traversée (3, 5) respective, sachant que
- les conducteurs (9) sont espacés axialement,
- chaque fois un conducteur d'une traversée est relié électriquement par une tige à un conducteur d'une autre traversée,
- l'élément de liaison comprend une tige (20) électriquement conductrice qui peut être déplacée axialement par rapport aux conducteurs (9) et qui présente à ses extrémités (21, 22) respectivement une fiche femelle (25) réalisée en tant que partie intégrante de la tige (20),
- les conducteurs des traversées électriques, considérés par paires dans le sens axial, sont alignés avec leurs axes longitudinaux, et deux de ces conducteurs axialement alignés sont reliés électriquement par la tige déplaçable axialement, et
- la fiche femelle est réalisée en tant que partie intégrante de la tige, par le fait que la tige est réalisée d'une seule pièce avec des ouvertures situées côté extrémités par rapport aux trous qui s'étendent axialement et dans lesquels sont disposés le ou les éléments de contact de la fiche femelle.

8. Procédé selon la revendication précédente, selon lequel chacune des traversées (3, 5) comprend un collet doté d'au moins une ouverture axiale dans laquelle un corps isolant en verre (7) est scellé par fusion, de manière à établir une étanchéité hermétique, sachant que chaque fois plusieurs conducteurs, qui traversent le corps isolant en verre (7) et dépassent sur les deux côtés du corps isolant (7), sont scellés par fusion dans les corps isolants en verre, et sachant que lors de l'assemblage, les deux traversées sont réunies dans le sens axial et de ce fait les éléments de liaison (20, 25 ; 50) électriquement conducteurs se déplacent dans le sens axial, le long des conducteurs connectés à l'aide des éléments de liaison, les traversées étant fixées avec un espacement axial, de manière à ce qu'un espace entourant les éléments de liaison soit enfermé hermétiquement entre les corps isolants.

9. Procédé selon l'une des deux revendications précédentes, **caractérisé en ce qu'**au moins un des conducteurs (9) des traversées (3, 5) est connecté à un contact à lamelles ou un contact à fils ressorts.

10. Utilisation d'un module de traversée électrique selon l'une des revendications 1 à 6 dans une traversée de cuve sous pression ou de cuve de sécurité.
